# EUROPÄISCHE PATENTSCHRIFT

(11) **EP 3 091 137 B1**
(45) Veröffentlichungstag und Bekanntmachung des Hinweises auf die Patenterteilung: **29.08.2018**
(21) Anmeldenummer: 16000990.8
(22) Anmeldetag: 03.05.2016
(51) Int. Cl.: E04H 9/14, E04H 9/04, F16B 5/06, F16B 25/00, F16B 25/10, F16B 33/00, F16B 35/04, F16B 35/06, E04B 1/70, E04B 1/76, E04F 19/04

(54) **SOCKELSYSTEM**
PLINTH SYSTEM
SYSTEME DE PLINTHE

(30) Priorität: 07.05.2015 DE 202015003312 U; 11.12.2015 DE 202015008507 U
(43) Veröffentlichungstag der Anmeldung: 09.11.2016
(73) Patentinhaber: Rieke, Lothar, 37308 Pfaffschwende (DE)
(72) Erfinder: Rieke, Lothar, 37308 Pfaffschwende (DE)
(74) Vertreter: Weihrauch, Frank

(56) Entgegenhaltungen:
- EP-A1- 0 977 925
- EP-A1- 2 180 104
- WO-A1-2013/036113
- AT-B1- 507 449
- DE-A1- 3 022 521
- DE-A1-102010 008 724
- DE-A1-102012 020 946
- GB-A- 2 244 501
- JP-A- 2011 003 547

## Beschreibung

Die Erfindung betrifft ein Sockelsystem für Gebäude.

Gebäude aus Mauerwerk, Beton oder Holz unterliegen insbesondere durch Umwelteinflüsse und Feuchtigkeit starken Beanspruchungen, wobei insbesondere die Sockelbereiche von derartigen Einflüssen betroffen sind.

Um die Gebäude in diesem Bereich zu schützen ist es aus dem Stand der Technik bekannt, Gebäudesockel mit geeigneten Sockelputzen zu versehen, um auf diese Weise eine erhöhte Schutzwirkung, insbesondere gegenüber Feuchtigkeit und Spritzwasser bereitzustellen.

Bei der Verwendung von Sockelputz besteht jedoch in der Regel das Problem, dass dieser direkt auf die Sockelwand aufgebracht wird und sich so Probleme hinsichtlich der Feuchtigkeitsdiffusion und -abführung aus der Sockelwand ergeben. Zudem besteht bei der Anwendung von Sockelputzen der Nachteil, dass dieser durch Witterungseinflüsse oder thermische Ausdehnungen der Sockelwand beschädigt werden kann und sich Risse in diesem ausbilden, durch welche Feuchtigkeit hinter den Sockelputz dringen und die Sockelwand beschädigen kann.

Um diesem Problem zu begegnen ist es aus dem Stand der Technik ebenfalls bekannt, Gebäudesockel mit vorgefertigten Sockelplatten zu versehen.

Derartige Sockelplatten bestehen meist aus Stein- oder Kunststoffmaterial und werden entweder direkt oder mittels einer Unterkonstruktion auf der Sockelwand montiert. Insbesondere bei einer Montage mittels Unterkonstruktion kann gleichzeitig eine Hinterlüftung der Sockelplatten bereitgestellt werden, welche eine Abführung von Feuchtigkeit aus der Sockelwand ermöglicht.

Die Verwendung von Sockelplatten ist insbesondere dahingehend nachteilig, als dass diese in der Regel mittels spezieller Montageprofile an der Sockelwand angeordnet werden müssen und somit keine universelle Verwendbarkeit der Sockelplatten bereitstellbar ist.

Ferner ist es aus dem Stand der Technik durch WO 2013/036113 A1 bekannt, eine Wand von außen mit einem wärmedämmenden Material zu versehen und vor dem wärmedämmenden Material eine Verkleidung anzuordnen und hierbei eine luftführende Ebene mit Lufteinlässen und -auslässen zwischen der Verkleidung und dem wärmedämmenden Material vorzusehen.

Zudem beschreibt DE 30 22 521 A1 eine Lösung, welche ebenfalls eine wärmedämmende Schicht und davor eine Verkleidung sowie einen Zwischenraum zwischen der wärmedämmenden Schicht und der Verkleidung vorsieht, aber zudem in dem Zwischenraum ein Rohrsystem als Wärmetauscher anordnet.

Allen bekannten Sockelverkleidungen ist zudem gemein, dass diese nur sehr begrenzt individualisierbar sind und somit bei deren Verwendung nur in geringem Umfang auf Kundenwünsche hinsichtlich des optischen Erscheinungsbildes der Sockelverkleidungen eingegangen werden kann.

Die Aufgabe der Erfindung bildet es somit, ein Sockelsystem bereitzustellen, welches zum einen kostengünstig herstellbar ist und welches zum anderen eine hohe Widerstandsfähigkeit gegen äußere Einwirkungen sowie eine effiziente Abführung von Feuchtigkeit aus der Sockelwand gewährleistet sowie eine problemlose individuelle Anpassbarkeit an unterschiedliche Anwendungsgeometrien und an das optische Erscheinungsbild bietet.

Die Aufgabe wird durch die im Patentanspruch 1 aufgeführten Merkmale gelöst. Bevorzugte Weiterbildungen ergeben sich aus den Unteransprüchen.

Ein erfindungsgemäßes Sockelsystem weist eine diffusionsoffene Dämmungsebene auf, welche durch Dämmungselemente gebildet wird.

Die Dämmungselemente sind vorliegend mit einem Sockel verbindbar, wobei die Verbindung beispielsweise stoffschlüssig durch Verkleben mit einem dauerelastischen Kleber und/oder formschlüssig mittels Verschraubung bereitstellbar ist. Darüber hinaus weist das erfindungsgemäße Sockelsystem eine Hinterlüftungsebene auf, welche Lufträume und verstellbare Beabstandungselemente aufweist.

Die Beabstandungselemente werden hierbei durch Stellschrauben, vorzugsweise durch Kunststoffschrauben gebildet, welche axial abschnittweise in die Dämmungselemente eingeschraubt werden und auf diese Weise eine formschlüssige und zugleich axial verstellbare Verbindung herstellen. Die Beabstandungselemente weisen Stellschrauben auf, welche auf der den Dämmungselementen gegenüberliegenden Seite einen Aufnahmeabschnitt aufweisen, welcher zur Befestigung von Verkleidungselementen dient. Als axial verstellbar ist dabei zu verstehen, dass durch die Verdrehung einer eingeschraubten Stellschraube eine Einschraubtiefe und damit ein Abstand von den Dämpfungselementen bis zu den Aufnahmeabschnitten festlegbar ist. Der Aufnahmeabschnitt ist vorzugsweise als flacher Kopf der Stellschraube ausgebildet. Im einfachsten Fall kann bei Stellschrauben eines ausreichend großen Durchmessers auch einfach die Stirnfläche den Aufnahmeabschnitt bilden.

Die Lufträume werden hierbei durch die Dämmungselemente und die Verkleidungselemente begrenzt und von den Beabstandungselementen durchsetzt.

Als weiteres Merkmal weist das erfindungsgemäße Sockelsystem eine Verkleidungsebene auf, welche durch die Verkleidungselemente gebildet wird, wobei die Verkleidungselemente flächig ausgebildet ist.

Die Verkleidungselemente können vorzugsweise aus Kunststoff, Biokunststoff oder aus Aluminiumverbundwerkstoff bestehen.

Ein Aluminiumverbundwerkstoff wird vorliegend durch eine Kunststoffinnenlage gebildet, welche beidseitig von zwei Aluminiumlagen eingeschlossen ist.

Ein solcher Aluminiumverbundwerkstoff weist insbesondere eine hohe Widerstandsfähigkeit gegen äußere Einflüsse und sehr gute Wärmedämmeigenschaften auf. Ein Biokunststoff ist insbesondere unter dem Gesichtspunkt der Ökologie und der Nachhaltigkeit vorteilhaft. Ein Vorteil des erfindungsgemäßen Sockelsystems besteht darin, dass durch die Anordnung der Beabstandungselemente und deren Anzahl pro Flächeneinheit eine Anpassung an die Materialeigenschaften der Verkleidungselemente erreicht werden kann, so dass auch Verkleidungselemente aus Material geringerer Festigkeit ohne Qualitätseinschränkungen für die mechanische Belastbarkeit des Sockelsystems eingesetzt werden können.

Die Verkleidungselemente sind erfindungsgemäß mit den Beabstandungselementen verbunden, wobei die Verbindung mittels des Aufnahmeabschnitts und stoffschlüssig durch Verkleben mit einem dauerelastischen Kleber oder mittels Verschrauben bereitstellbar ist.

Das Sockelsystem weist ferner ein Tropfkantenelement auf, welches innerhalb des Sockelsystems derart angeordnet ist, dass dieses zumindest die Hinterlüftungsebene und die Verkleidungsebene an deren jeweiligen Oberseiten überkragt. Vorzugsweise ist das Tropfkantenelement zudem so innerhalb des Sockelsystems angeordnet, dass dieses zusätzlich auch die Dämmungsebene überkragt.

Das Tropfkantenelement ist zudem gegenüber der Verkleidungsebene derart angeordnet, dass sich zwischen den Oberseiten der Verkleidungselemente und dem Tropfkantenelement ein erster Öffnungsquerschnitt ausbildet.

Als weiteres Merkmal des Sockelsystems ist an der Unterseite der Verkleidungselemente ein zweiter Öffnungsquerschnitt ausgebildet.

Der zweite Öffnungsquerschnitt kann hierbei durch einen Luftspalt zwischen den Verkleidungselementen und dem Sockel selbst oder durch eine oder mehrere Ausnehmungen im Bereich der Unterseite der Verkleidungselemente gebildet werden.

Die Anordnung des ersten und zweiten Öffnungsquerschnittes innerhalb des Sockelsystems erfolgt derart, dass die Lufträume der Hinterlüftungsebene mit den Öffnungsquerschnitten luftführend verbunden sind.

Auf diese Weise ist als besonderer Vorteil der Erfindung eine effiziente Hinterlüftung zwischen der Dämmungsebene und der Verkleidungsebene bereitstellbar, mittels derer Feuchtigkeit, welche beispielsweise aus dem Sockel durch die Dämmungsebene hindurch diffundiert oder welche durch die Öffnungsquerschnitte hinter die Verkleidungsebene gelangt, wirksam abgeführt werden kann. Zugleich wird das Eindringen von Spritzwasser zuverlässig verhindert.

Die erfindungsgemäße Ausbildung der Beabstandungselemente in dem Sockelsystem ist insbesondere dahingehend vorteilhaft, dass zum einen ein unmittelbarer Kontakt der Verkleidungselemente mit den Dämmungselementen und somit etwaige Kältebrücken oder Taupunktbildungen vermieden und zum anderen vorhandene Unebenheiten der Dämmungselemente und/oder des Sockels durch unterschiedliche Einschraubtiefen der Beabstandungselemente in die Dämmungselemente ausgeglichen werden können. Auf diese Weise ist mit sehr geringem Aufwand eine planebene Verkleidungsebene herstellbar.

Zudem besteht ein Vorteil der Beabstandungselemente darin, dass die Tiefe der Hinterlüftungsebene durch unterschiedliche Längen oder Einschraubtiefen der Beabstandungselemente variiert werden kann.

Ein weiterer technologischer Vorteil des Sockelsystems besteht in der Verwendbarkeit von Verkleidungselementen aus unterschiedlichen Werkstoffen, beispielsweise Kunststoff, Biokunststoff oder Aluminiumverbundwerkstoff.

Die beispielsweise aus Aluminiumverbundwerkstoff ausgebildeten Verkleidungselemente weisen gegenüber herkömmlichen Sockelplatten eine deutlich höhere Widerstandsfähigkeit gegen äußere Einflüsse, insbesondere gegen Witterungsaber auch Stoßeinwirkungen auf.

Als weiteren Vorteil kann die Stabilität durch Festlegung einer geeigneten Anordnung von Beabstandungselementen sowie deren Anzahl gemäß konkreten Anforderungen besonders einfach eingestellt werden. So kann durch diese einfache Maßnahme beispielsweise für Sockel im öffentlichen Raum eine höhere Stabilität eingestellt werden als dies beispielsweise bei einem Gebäude auf einem eingezäunten Gelände erforderlich wäre.

Gegenüber herkömmlichen Sockelsystemen können die vorliegenden Verkleidungselemente zudem ohne entsprechend angepasste Montageprofile an der Hinterlüftungsebene angeordnet werden. Dies ermöglicht insbesondere die Verwendung von marktgängigem Plattenmaterial. Auf diese Weise kann als weiterer besonderer Vorteil eine kostengünstige Bereitstellung sowie eine kostengünstige Montage der Verkleidungselemente erfolgen. Weiterhin wird eine universelle Anpassbarkeit der Verkleidungselemente an unterschiedliche Sockelarten oder - abschnitte ermöglicht.

Darüber hinaus können die erfindungsgemäßen Verkleidungselemente als besonderer Vorteil mit Folien beklebt oder bedruckt werden um so deren optisches Erscheinungsbild individuell gestalten oder deren abweisende Wirkung, beispielsweise gegen Verschmutzungen wie Graffiti oder Spritzschmutz, nochmals verbessern zu können.

In einer bevorzugten Weiterbildung des Sockelsystems weisen die Verkleidungselemente eine Durchsetzung auf, welche beispielsweise mit einem Fenster oder einer Lüftungsöffnung in dem Sockel korrespondiert.

Den Verkleidungselementen ist in dieser Weiterbildung ferner ein verschiebliches Abschottungselement zugeordnet, mittels dessen die Durchsetzung dichtend abdeckbar ist.

Das Abschottungselement wird hierbei außenliegend und vorzugsweise mittels Führungsprofilen an den Verkleidungselementen angeordnet.

Im Bereich der Durchsetzung ist darüber hinaus ein umlaufendes Dichtelement angeordnet, mittels dessen eine dichtende Verbindung zwischen der Verkleidungsebene und der Dämmungsebene bereitgestellt wird.

Die hier aufgeführte Weiterbildung der Erfindung kommt insbesondere in Hochwassergebieten zur Anwendung und ermöglicht als besonderen Vorteil, dass im Falle eines Hochwassers Öffnungen in dem Sockel mittels des geschlossenen Abschottungselements und des Dichtelements wirksam vor eindringendem Wasser geschützt werden können.

Im geöffneten Zustand des Abschottungselements können demgegenüber die Öffnungen des Sockels ihre gewünschte Funktion, wie etwa die Beleuchtung oder die Belüftung des Gebäudeinneren, ungehindert ausführen.

Eine vorteilhafte Variante des Sockelsystems sieht zudem vor, dass die Dämmungselemente aus einem Aerogelmaterial bestehen.

Die Vorteile des Aerogelmaterials liegen neben seiner hohen Widerstandsfähigkeit gegen äußere Einflüsse in dessen besonders guten Wärmedämmeigenschaften, wodurch ein besonders guter Wärmedämmwert des erfindungsgemäßen Sockelsystems bereitgestellt werden kann.

Des Weiteren ist in einer vorteilhaften Weiterbildung des Sockelsystems zwischen der Dämmungsebene und dem Sockel eine Folie, insbesondere aus EPDM - Material, angeordnet.

Durch diese Folie wird als besonderer Vorteil ein Eindringen von Feuchtigkeit in den Sockel wirksam verhindert und gleichzeitig ein gleichmäßiger Untergrund für die Anordnung der Dämmungselemente an dem Sockel bereitgestellt.

Die Verbindung der Verkleidungselemente miteinander erfolgt in einer bevorzugten Weiterbildung der Erfindung mittels H- oder Eckprofilen, in welche die Verkleidungselemente mit der jeweiligen Stirnseite eingeschoben und in diesen, je nach Anwendungsfall, verklebt werden.

Mittels der H- und Eckprofile wird als besonderer Vorteil ein unkompliziertes und insbesondere verschraubungsfreies Verbinden der Verkleidungselemente miteinander ermöglicht.

Als besonderer Vorteil werden die Verkleidungselemente in einer Planebene festgelegt, wobei zugleich eine thermische Längenausdehnung nicht behindert wird. Zudem wird durch die H- und Eckprofile ein zuverlässiger Schutz gegen ein Eindringen von Spritzwasser an den Verkleidungselementenstößen verhindert.

Die H- oder Eckprofile bestehen in einer weiteren vorteilhaften Variante der Erfindung aus einem Elastomermaterial, wodurch diese als besonderer Vorteil kostengünstig herstellbar und besonders einfach an unterschiedliche Abmessungen der Verkleidungselemente anpassbar sind.

In einer bevorzugten Ausbildung weist das Sockelsystem zudem aktive Lüfterelemente auf, welche vorzugsweise im Bereich der Verkleidungsebene angeordnet und erfindungsgemäß mit den Lufträumen luftführend verbunden sind.

Die Lüfterelemente sind vorzugsweise solarbetrieben und ermöglichen als besonderen Vorteil eine zusätzliche Optimierung der Hinterlüftung der Verkleidungselemente.

In einer weiteren bevorzugten Weiterbildung ist an dem Tropfkantenelement an dessen Überkragungsabschnitt auf der Unterseite mindestens eine LED-Lichtquelle angeordnet. Die mindestens eine LED-Lichtquelle ist dabei vorzugsweise als sogenannter LED-Streifen ausgebildet. Mittels dieser bevorzugten Weiterbildung ist eine blendfreie Lichtabgabe möglich, indem vorteilhafterweise der Überkragungsabschnitt zugleich den Blendschutz ausbildet. Ferner ist durch den Überkragungsabschnitt des Tropfkantenelements zugleich die mindestens eine LED-Lichtquelle vor Regenwasser geschützt. Die Lichtabgabe kann vorzugsweise auf die Verkleidungselemente gerichtet sein. Dies ist besonders dann vorteilhaft, wenn die Verkleidungselemente als Träger einer optischen Gestaltung oder einer Werbung dienen. Darüber hinaus kann die Lichtabgabe auch als allgemeine Ambientebeleuchtung für das Gebäude dienen. Letztlich kann die Lichtabgabe auch zur Erhellung eines Geh- oder Fahrbereichs in der Nähe des Gebäudes dienen.

Gemäß einer weiteren vorteilhaften Weiterbildung weist die Stellschraube einen Stützbolzen, eine Auflagescheibe, eine Helixstruktur sowie einen Aussteifungsabschnitt auf.

Der Stützbolzen ist eine länglich ausgebildete und vorzugsweise zylindrische Struktur, welche an einem ersten Ende spitz zuläuft und an einem zweiten Ende mit der Auflagescheibe verbunden ist.

Die Auflagescheibe ist flächig sowie vorzugsweise rund ausgebildet. Die Auflagescheibe weist eine Oberseite und der Oberseite gegenüberliegend eine Unterseite auf. Der Stützbolzen ist mit der Auflagescheibe an deren Unterseite verbunden. Die Planebene der Auflagescheibe ist dabei im wesentlichen rechtwinklig zur Längsachse des Stützbolzens angeordnet. An der Oberseite der Auflagescheibe ist ein Fassadenpaneel befestigbar. Die Auflagescheibe weist eine Mehrzahl von Durchsetzungen auf. Die Durchsetzungen sind zum ersten geeignet, eine Klebeverbindung mit einem Verkleidungselement bereitzustellen, indem eine auf der Oberseite befindliche Klebemasse bei einem Aufdrücken des Verkleidungselement teilweise durch die Durchsetzungen dringt und vorzugsweise an der Unterseite verkümmt oder pilzkopfartig aufquillt und so nach einem Aushärten einen zusätzlichen Formschluss bereitstellt. Zum zweiten können die Durchsetzungen auch Schraub- oder Steckverbindungen aufnehmen. Die Größe der Auflagescheibe ist dabei entsprechend der Größe der anzubringenden Verkleidungselemente zu wählen.

Die Helixstruktur umgibt den Stützbolzen zumindest abschnittsweise. Die Helixstruktur und der Stützbolzen stehen in fester Lagebeziehung zueinander. Vorzugsweise ist die Helixstruktur an den Stützbolzen angeformt, dabei sind Helixstuktur und Stützbolzen vorzugsweise einteilig hergestellt. Vorzugsweise weist die Helixstruktur einen groben Aufbau mit großer Tiefe auf, um in einem Dämmmaterial guten Halt zu gewährleisten.

Der Aussteifungsabschnitt ist sowohl mit dem Stützbolzen als auch mit einer Unterseite der Auflagescheibe verbunden. Der Aussteifungsabschnitt entlastet die Verbindungsstelle von Auflagescheibe und Stützbolzen und erhöht die Knickstabilität der Stellschraube. Zudem wird die Torsionsbelastung des Stützbolzens während der Montage, welche durch Eindrehen erfolgt, reduziert.

Die Stellschraube wird bei bestimmungsgemäßer Montage in der Dämmung verschraubt und ermöglicht die Anbringung der Verkleidungselemente an der Oberseite der Auflagescheibe, vorzugsweise durch Kleben oder Schrauben, wobei die entstandene Distanz eine Hinterlüftungszone bildet. Das spitz zulaufende erste Ende des Stützbolzens erleichtert die exakte Positionierung zum Einschrauben sowie das Einschrauben insbesondere in der Phase bis zur Herstellung des Eingriffs der Helixstuktur in der Dämmung. Als geeignete Dämmung kommen insbesondere geschäumte Kunststoffe wie Schaumpolystyrol oder Schaumpolyurethan sowie auch ausreichend feste Faserdämmstoffe in Betracht.

Die Stellschraube weist insbesondere nachfolgende Vorteile auf. Ein erster Vorteil besteht in der besonderen Einfachheit der Konstruktion. Insbesondere besteht eine lediglich einteilige Unterkonstrution. Ein zweiter Vorteil besteht darin, dass die Stellschraube auch bei bestehenden Wärmedämmfassaden montierbar ist, so dass eine nachträgliche Montage von Verkleidungselementen ohne eine sonst zumindest teilweise erforderliche Zerstörung der Wärmedämmebene ermöglicht wird. Ein dritter Vorteil besteht in der Möglichkeit einer werkzeuglosen Montage durch manuelles Eindrehen. Optional kann aber auch ein Formabschnitt, beispielsweise als Innensechskant an der Oberseite ausgebildet sein, so dass eine Montageunterstützung durch handgeführte elektrische Schraubwerkzeuge möglich ist. Durch die Einschraubtiefe kann der Abstand der Verkleidungselemente von der Dämmung wunschgemäß eingestellt werden. Dabei können zudem etwaige Unebenheiten der Unterstruktur, insbesondere einer Hauswand, mittels der stufenlos einstellbaren Breite der Hinterlüftungszone ausgeglichen werden, so dass eine planebene Anordnung der Verkleidungselemente erreicht werden kann. Einen Montagevorteil in diesem Zusammenhang bildet es zudem, dass mit nur einer Bewegungsart, dem Einschrauben, sowohl die Montage als auch die Einstellung erfolgt. Letztlich besteht als besonderer Vorteil die besonders gute thermische Trennung, indem die Stellschraube bestimmungsgemäß in der Dämmung verankert wird und nicht in der zu isolierenden tragenden Unterstruktur, beispielsweise einer Hauswand.

Gemäß einer vorteilhaften Weiterbildung wird die beschriebene Stellschraube durch eine zur Auflagescheibe beabstandete Anschlagplatte erweitert, welche vorzugsweise von runder Form und parallel zur Auflagescheibe angeordnet ist. Zudem wird die Anschlagplatte vom Stützbolzen durchsetzt. Die Helixstruktur ist auf der der Auflagescheibe abgewandten Seite der Anschlagplatte angeordnet. Diese Weiterbildung ermöglicht eine exakte Einstellung der Distanz zwischen den Verkleidungselementen und der Dämmung, indem die Anschlagplatte die Eindringtiefe der Stellschraube in die Dämmung festlegt. Damit verbunden ist auch eine Vereinfachung der Montage, da ein Justierungsaufwand entfallen kann. Besonders vorteilhaft ist diese Weiterbildung bei geraden Dämmungen. Aber auch bei unebenen Dämmungen besteht der Vorteil der Sicherung einer Mindesthinterlüftungsbreite.

Nach einer weiteren vorteilhaften Ausgestaltung ist der Aussteifungsabschnitt mit der Anschlagplatte verbunden. Somit wird neben einer verbesserten Stabilität der Konstruktion eine einfachere Möglichkeit der Anbringung der Stellschraube erreicht, wobei der Aussteifungsabschnitt als Haltegriff fungiert.

Gemäß einer weiteren vorteilhaften Weiterbildung ist die Stellschraube aus einem Kunststoff gefertigt. Hieraus ergeben sich mehrere Vorteile. Zum einen wird somit eine geringe Wärmeleitfähigkeit erreicht. Diese verbessert die thermischen Eigenschaften, da die Stellschraube in die Wärmedämmebene eindringt und in der Folge die Bildung von Wärmebrücken vermieden wird. Daneben liegen gegenüber der Verwendung von metallischen Werkstoffen Vorteile bezüglich der einfacheren Herstellbarkeit, beispielsweise als Spritzgussteil, und im Bereich des Korrosionsschutzes vor.

Die Erfindung wird in Ausführungsbeispielen anhand von
Fig. 1 Seitenansicht geschnitten
Fig. 2 Draufsicht geschnitten
Fig. 3 Prinzipdarstellung Verkleidungselemente verbunden
Fig. 4 Seitenansicht geschnitten mit Abschottungselement
Fig. 5 Draufsicht geschnitten mit Abschottungselement
Fig. 6 vereinfachte Detaildarstellung mit Verschraubung als Schnittansicht
Fig. 7 vereinfachte Detaildarstellung mit Verklebung als Schnittansicht
Fig. 8 einer perspektivischen Darstellung der Stellschraube,
Fig. 9 einer Seitenansicht der Stellschraube,
Fig. 10 einer Draufsicht der Stellschraube
näher erläutert.

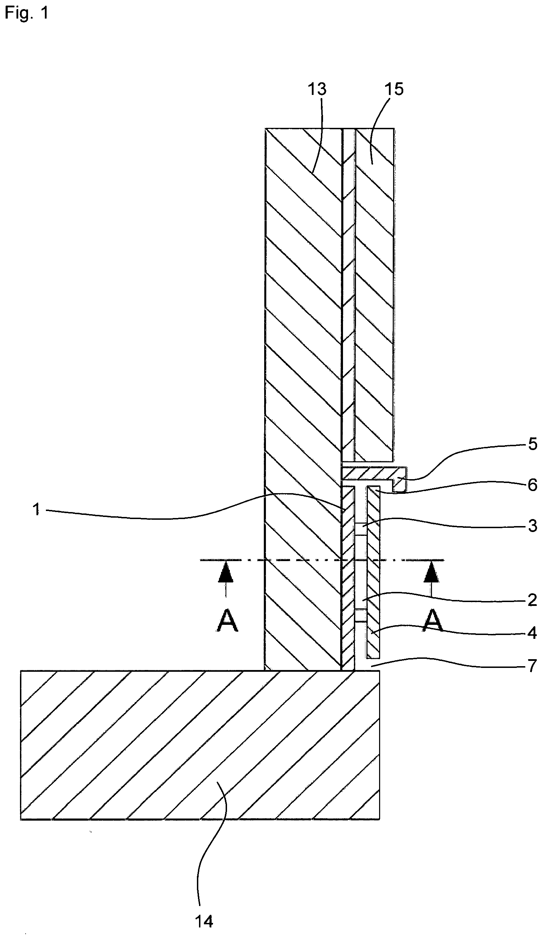

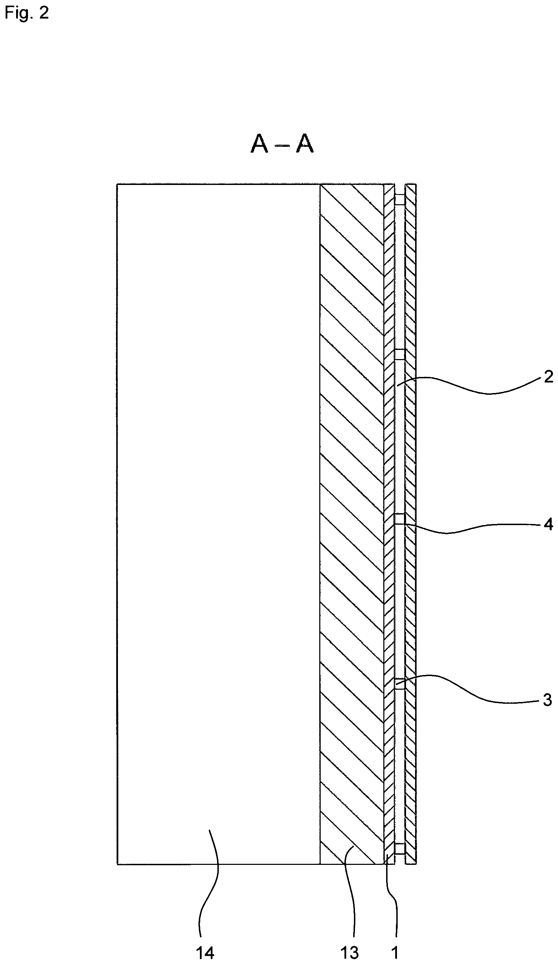

Die Figuren 1 und 2 zeigen ein erfindungsgemäßes Sockelsystem in einer ersten Ausführungsvariante in einer geschnittenen Prinzipdarstellung.

Das Sockelsystem wird vorliegend auf eine Gebäudewand 13 angebracht und weist zum einen eine diffusionsoffene Dämmungsebene auf, welche durch Dämmungselemente 1 gebildet wird.

Die Dämmungselemente 1 bestehen vorliegend aus Aerogelmaterial und werden mittels dauerelastischem Kleber mit der Gebäudewand verbunden.

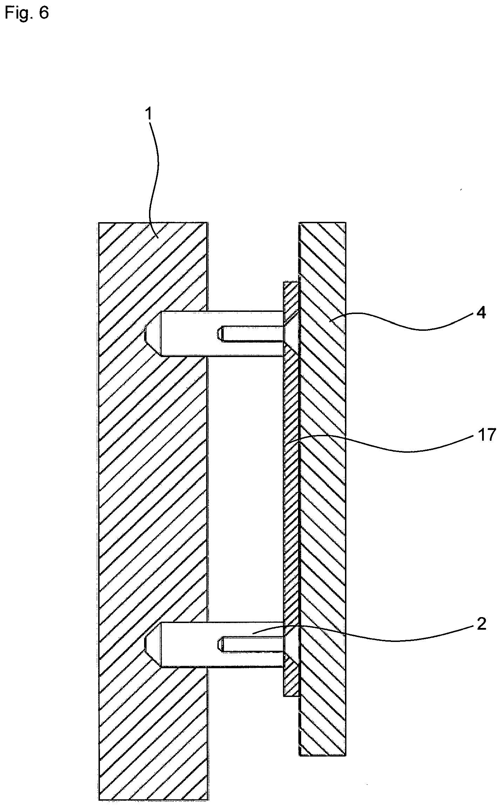

Das Sockelsystem weist zum zweiten eine Hinterlüftungsebene auf, welche, wie insbesondere in Fig. 1 und Fig. 2 dargestellt, durch Lufträume 2 und Beabstandungselemente 3 gebildet wird.Die Beabstandungselemente 3 sind vorliegend als Stellschrauben in der Form von Isolierdübeln ausgebildet, welche zum einen mit den Dämmungselementen 1 verbunden sind und welchen, wie in Fig. 6 dargestellt, vorliegend ein Aufnahmeabschnitt 17 zugeordnet ist. Der Aufnahmeabschnitt 17 ist in dem Ausführungsbeispiel nach Fig. 6 als zusätzliches Element mit den Beabstandungselementen 3 durch Verschraubung verbunden.

An die Hinterlüftungsebene schließt sich vorliegend eine Verkleidungsebene an, welche durch Verkleidungselemente 4 gebildet wird.

Die Verkleidungselemente 4 bestehen in den vorliegenden Ausführungsbeispielen aus einem Aluminiumverbundwerkstoff, aufweisend eine Kunststoff-Innenlage und jeweils zwei Aluminium-Außenlagen.

Die Verkleidungselemente 4 werden vorliegend, beispielsweise mittels eines dauerelastischen Klebers oder mittels Verschraubung, mit den, den Beabstandungselementen 3 zugeordneten Aufnahmeabschnitten 17 verbunden.

Wie speziell Fig. 1 zeigt, weist das Sockelsystem zusätzlich ein Tropfkantenelement 5 auf, welches vorliegend alle Ebenen des Sockelsystems überkragt und welches insbesondere ein oberseitiges Eindringen von Wasser in das Sockelsystem verhindert.

Wie ebenfalls aus Fig. 1 ersichtlich, sind insbesondere die Verkleidungselemente 4 derart innerhalb des Sockelsystems angeordnet, dass zwischen diesen und dem Tropfkantenelement 5 ein erster Öffnungsquerschnitt 6 und zwischen diesen und dem Dämmungselement 1 im Bereich des Fundaments 14 ein zweiter Öffnungsquerschnitt 7 ausgebildet ist.

Die beiden Öffnungsquerschnitte 6 und 7 sind hierbei luftführend mit den speziell in Fig. 1 und Fig. 2 gezeigten Lufträumen 2 der Hinterlüftungsebene verbunden und ermöglichen auf diese Weise eine effiziente Hinterlüftung der Verkleidungselemente 4.

Mittels der Hinterlüftung kann insbesondere Feuchtigkeit, welche durch die Gebäudewand 13 und die diffusionsoffene Dämmungsebene nach Außen gelangt, wirkungsvoll abgeführt werden.

Die Fig. 2 zeigt in einem Schnitt insbesondere die Anordnung von Luftkanälen 2 und Beabstandungselementen 3 im Ausführungsbeispiel.

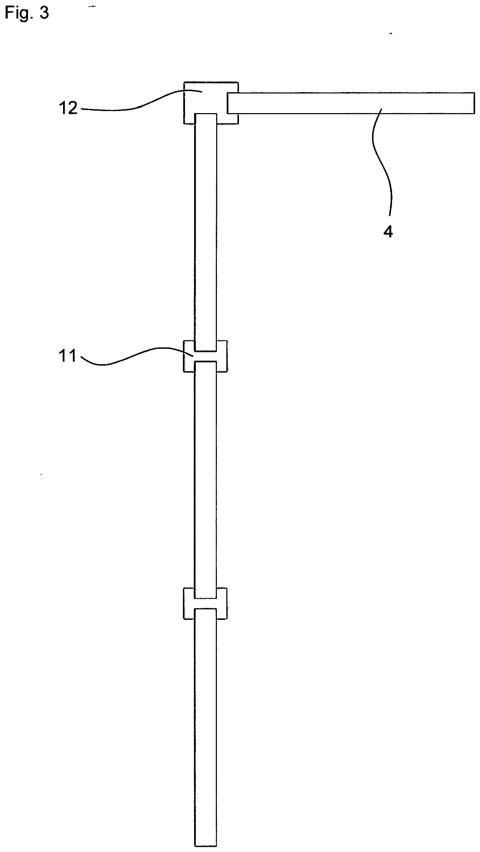

Die Fig. 3 zeigt in einer Prinzipdarstellung mehrere, miteinander verbundene Verkleidungselemente 4.

Die Verbindung der Verkleidungselemente 4 erfolgt vorliegend auf besonders vorteilhafte Art und Weise durch H-Profile 11 sowie durch Eckprofile 12, wobei die Profile jeweils aus einem Elastomermaterial bestehen und somit zum einen kostengünstig herstellbar und zum anderen besonders einfach an unterschiedliche Abmessungen der Verkleidungselemente 4 angepasst werden können.

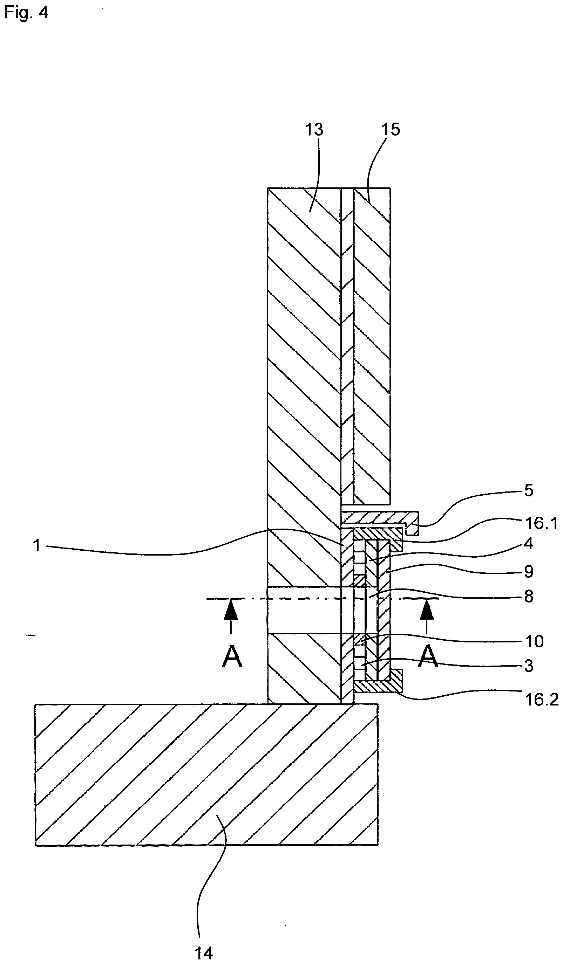

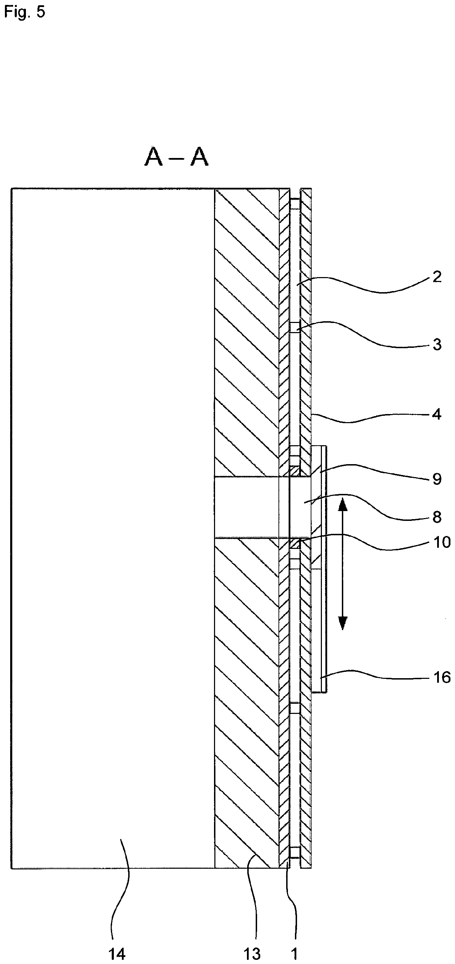

Die Figuren 4 und 5 zeigen eine weitere Ausführungsvariante des Sockelsystems, in welcher sich dieses insbesondere zur Anwendung in Hochwassergebieten eignet.

Wie aus Fig. 4 ersichtlich, weisen die Verkleidungselemente 4 vorliegend eine Durchsetzung 8 auf, welche beispielsweise mit einem Fenster oder einer Lüftungsöffnung in dem Sockelbereich der Gebäudewand 13 korrespondiert.

Darüber hinaus ist vorliegend im Bereich der Durchsetzung 8 in der Hinterlüftungsebene ein umlaufendes Dichtelement 10 angeordnet, durch welches im Bereich der Durchsetzung 8 eine dichtende Verbindung zwischen der Dämmungsebene und der Verkleidungsebene bereitgestellt wird.

Wie auch aus Fig. 5 ersichtlich, ist den Verkleidungselementen 4 zudem ein verschiebliches Abschottungselement 9 zugeordnet, welches vorliegend durch zwei Führungsprofile 16 so in Längsrichtung der Verkleidungselemente 4 verschieblich ist, dass mit diesem die Durchsetzung 8 dichtend abdeckbar ist.

Mittels des Abschottungselements 9 und des Dichtelements 10 ermöglicht es das Sockelsystem auf besonders vorteilhafte Art und Weise, dass, im Falle eines Hochwassers, in dem Sockelbereich vorhandene Öffnungen schnell und sicher verschlossen und gegen eindringendes Wasser geschützt werden können.

Zudem besteht ein weiterer Vorteil des Sockelsystems in den vorliegenden Ausführungsvarianten darin, dass die Verkleidungselemente 4 aus Aluminiumverbundwerkstoff besonders unkompliziert an unterschiedliche Sockelabmessungen anpassbar und gleichzeitig sehr widerstandsfähig gegenüber äußeren Einwirkungen sind.

Ferner besteht vorliegend die Möglichkeit, das optische Erscheinungsbild der Verkleidungselemente 4 durch Bedrucken oder Bekleben mit einer Folie an spezifische Kundenwünsche anzupassen.

Die Fig. 6 zeigt eine Detailansicht des erfindungsgemäßen Sockelsystems in einer vereinfachten Schnittansicht. Hier liegt ein besonderes Ausführungsbeispiel vor, bei welchem der Aufnahmeabschnitt 17 als separates Bauteil ausgebildet ist.

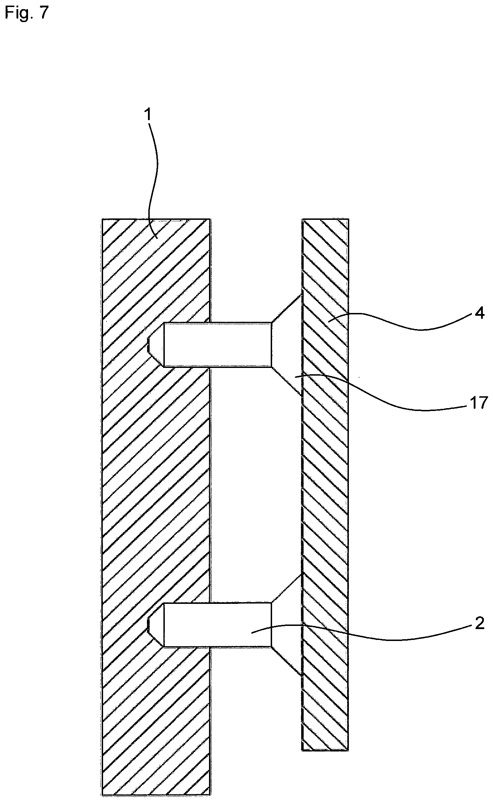

Die Fig. 7 zeigt eine Ausführungsbeispiel in einer besonders vorteilhaften Variante, bei der der Aufnahmeabschnitt als integraler Bestandteil des Beabstandungselements 3 in Gestalt eines Kopfes der Stellschraube ausgebildet ist.

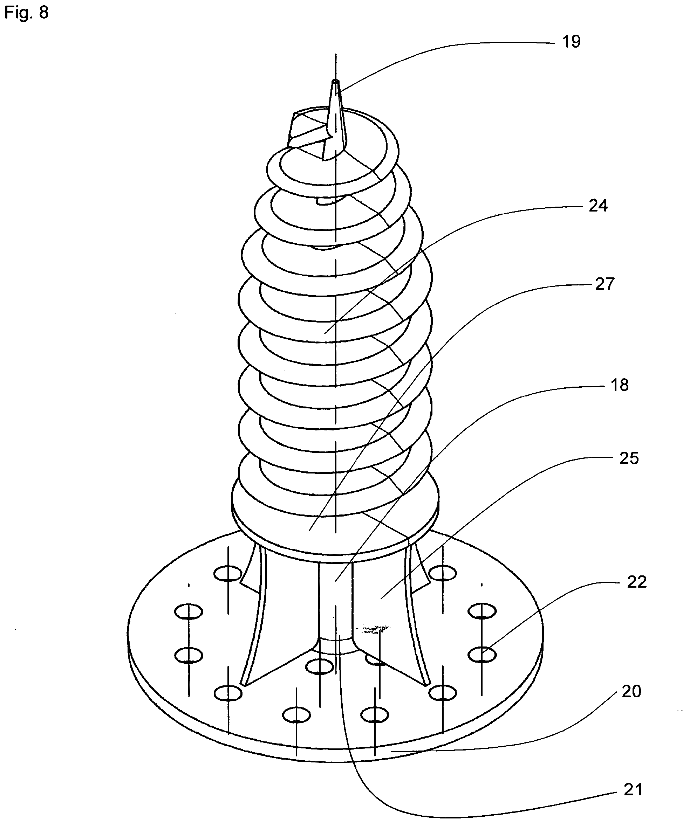

Fig. 8 zeigt eine perspektivische Darstellung eines Ausführungsbeispiels der Stellschraube mit allen wesentlichen Komponenten. Der Stützbolzen 1 läuft zum ersten Ende 2 spitz zu und ist am zweiten Ende 4 mit der Unterseite 9 der Auflagescheibe 3 verbunden. Der Durchmesser des Stützbolzens 1 ist dabei mit 8 mm gewählt worden. Bei der hier verwendeten Helixstruktur 7 handelt es sich um eine rechtsgängige Helix, deren Durchmesser zum ersten Ende 2 des Stützbolzens 1 hin abnimmt. Die Auflagescheibe 3 mit einem Durchmesser von 60 mm und einer Höhe von 2,5 mm weist eine Gesamtzahl von 18 runden Durchsetzungen 5 auf, die auf zwei verschiedenen Radien angeordnet sind. Der Aussteifungsabschnitt 8 ist hierbei sowohl mit der Unterseite 9 der Auflagescheibe 3 als auch mit der Anschlagplatte 10 verbunden und wird aus vier separaten Elementen gebildet, die gleichmäßig auf der Unterseite 9 der Auflagescheibe 3 mit einem Winkel von jeweils 90° zueinander angeordnet sind. Die Elemente des Aussteifungsabschnitts 8 überspannen nicht den gesamten Durchmesser der Auflagescheibe 3 und enden innenseitig am angrenzenden Stützbolzen 1. Die Anschlagplatte 10 verfügt hierbei mit 30 mm über den halben Durchmesser der Auflagescheibe 3. Im Ausführungsbeispiel ist die gesamte Stellschraube aus Kunststoff gefertigt.

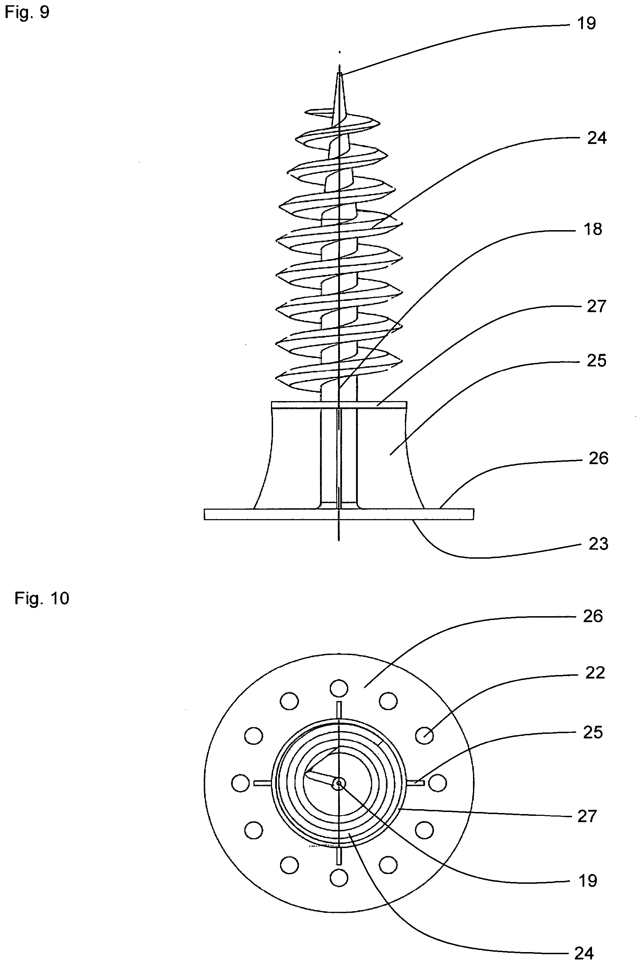

Fig. 9 zeigt das Ausführungsbeispiel der Stellschraube in einer Seitenansicht, wobei insbesondere die im Wesentlichen orthogonale Ausrichtung der Auflagescheibe 3 zu dem Stützbolzen 1 ersichtlich ist.

In Fig. 10 ist die Stellschraube aus der Draufsicht dargestellt. Hierbei ist im Speziellen die Helixstruktur 7, deren Durchmesser sich entlang der Längsachse der Stellschraube in Richtung des ersten Endes 2 verringert, das erste Ende 2 des Stützbolzens 1 sowie die Unterseite 9 der Auflagescheibe 3 veranschaulicht.

### Verwendete Bezugszeichen

- 1: Dämmungselemente
- 2: Lufträume
- 3: Beabstandungselemente
- 4: Verkleidungselemente
- 5: Tropfkantenelemente
- 6: erster Öffnungsquerschnitt
- 7: zweiter Öffnungsquerschnitt
- 8: Durchsetzung
- 9: Abschottungselement
- 10: Dichtelement
- 11: H-Profil
- 12: Eckprofil
- 13: Gebäudewand
- 14: Fundament
- 15: Fassade
- 16: Führungsprofile
- 17: Aufnahmeabschnitt
- 18: Stützbolzen
- 19: Erstes Ende
- 20: Auflagescheibe
- 21: Zweites Ende
- 22: Durchsetzung
- 23: Oberseite
- 24: Helixstruktur
- 25: Aussteifungsabschnitt
- 26: Unterseite
- 27: Anschlagplatte

## Patentansprüche

1. Sockelsystem,
aufweisend eine diffusionsoffene Dämmungsebene, welche eine Mehrzahl Dämmungselemente (1) aufweist, wobei die Dämmungselemente (1) mit einem Sockel verbindbar sind,
und aufweisend eine Hinterlüftungsebene, welche Lufträume (2) sowie Beabstandungselemente (3) aufweist,
und aufweisend eine Verkleidungsebene, welche eine Mehrzahl Verkleidungselemente (4) aufweist, wobei die Verkleidungselemente (4) flächig ausgebildet und mit den Beabstandungselementen (3) an deren Aufnahmeabschnitt verbunden sind,
sowie aufweisend ein Tropfkantenelement (5), welches mit einem Überkragungsabschnitt zumindest die Hinterlüftungsebene und die Verkleidungsebene an deren Oberseiten überkragt, wobei zwischen dem Tropfkantenelement (5) und den Oberseiten der Verkleidungselemente ein erster Öffnungsquerschnitt (6) ausgebildet ist, und wobei an der Unterseite der Verkleidungselemente (4) ein zweiter Öffnungsquerschnitt (7) ausgebildet ist, und wobei die Lufträume (2) mit dem ersten Öffnungsquerschnitt (6) und dem zweiten Öffnungsquerschnitt (7) luftführend verbunden sind,
**dadurch gekennzeichnet,**
**dass** die Beabstandungselemente (3) als Stellschrauben ausgebildet sind und mit der Dämmungsebene formschlüssig und mittels deren Verdrehung axial verstellbar verbunden sind, wobei die Stellschrauben axial abschnittsweise in die Dämmungsebene eingeschraubt sind und wobei die Stellschrauben einen Aufnahmeabschnitt aufweisen,.

2. Sockelsystem nach Anspruch 1,
wobei die Verkleidungselemente (4) eine Durchsetzung (8) aufweisen und wobei den Verkleidungselementen (4) ein verschiebliches Abschottungselement (9) zugeordnet ist, mit welchem die Durchsetzung (8) dichtend abdeckbar ist, und wobei im Bereich der Durchsetzung (8) in der Hinterlüftungsebene ein umlaufendes Dichtelement (10) angeordnet ist, mittels dessen eine dichtende Verbindung zwischen der Verkleidungsebene und der Dämmebene bereitgestellt wird.

3. Sockelsystem nach Anspruch 1 oder 2,
wobei die Dämmungselemente (1) aus einem Aerogelmaterial bestehen.

4. Sockelsystem nach einem der vorhergehenden Ansprüche,
wobei zwischen der Dämmungsebene und dem Sockel eine Folie, insbesondere aus EPDM-Material, angeordnet ist.

5. Sockelsystem nach einem der vorhergehenden Ansprüche,
wobei die Verkleidungselemente mittels H-Profilen (11) oder Eckprofilen (12) miteinander verbindbar sind.

6. Sockelsystem nach Anspruch 5,
wobei die H-Profile (11) oder die Eckprofile (12) aus einem Elastomermaterial bestehen.

7. Sockelsystem nach einem der vorhergehenden Ansprüche,
wobei dieses aktive Lüfterelemente aufweist, welche mit den Lufträumen (2) luftführend verbunden sind.

8. Sockelsystem nach einem der vorhergehenden Ansprüche,
wobei an dem Tropfkantenelement (5) an einer Unterseite von dessen Überkragungsabschnitt mindestens eine LED-Lichtquelle aufweist.

9. Sockelsystem nach einem der vorhergehenden Ansprüche,
wobei die Stellschraube einen Stützbolzen (18) aufweist, wobei ein erstes Ende (19) des Stützbolzens (18) spitz zuläuft, und aufweisend eine Auflagescheibe (20), wobei die Auflagescheibe (20) mit einem zweiten Ende (21) des Stützbolzens (18) verbunden ist, eine Planebene der Auflagescheibe (20) rechtwinklig zu einer Längsachse des Stützbolzens (18) angeordnet ist, die Auflagescheibe (20) eine Mehrzahl von Durchsetzungen (22) aufweist und an einer Oberseite (23) der Auflagescheibe (20) ein Fassadenpaneel befestigbar ist, sowie aufweisend eine Helixstruktur (24), wobei die Helixstruktur (24) den Stützbolzen (18) zumindet teilweise umgibt, die Helixstruktur (24) und der Stützbolzen (18) in fester Lagebeziehung zueinander stehen, und aufweisend einen Aussteifungsabschnitt (25), wobei der Aussteifungsabschnitt (25) sowohl mit dem Stützbolzen (18) als auch mit einer Unterseite (26) der Auflagescheibe (20) verbunden ist.

10. Sockelsystem nach Anspruch 9,
wobei eine zur Auflagescheibe (20) beabstandete Anschlagplatte (27) angeordnet ist, die Anschlagplatte (27) parallel zur Auflagescheibe (20) angeordnet ist, die Anschlagplatte (27) von dem Stützbolzen (18) durchsetzt ist und die Helixstruktur (24) auf einer der Auflagescheibe (20) abgewandten Seite der Anschlagplatte (27) angeordnet ist.

11. Sockelsystem nach Anspruch 9 oder 10,
wobei der Aussteifungsabschnitt (25) zusätzlich mit der Anschlagplatte (27) verbunden ist.

12. Sockelsystem nach einem der Ansprüche 9 bis 11,
wobei die Stellschraube aus Kunststoff besteht.

## Claims

1. Base system,
comprising a diffusion-open insulation plane which comprises a plurality of insulation elements (1), wherein the insulation elements (1) can be connected to a base,
and comprising a rear ventilation plane which has air spaces (2) and spacing elements (3),
and comprising a cladding plane which has a plurality of cladding elements (4), wherein the cladding elements (4) have a two-dimensional shape and are connected to the spacing elements (3) at the receiving section thereof,
as well as comprising a drip-edge element (5) which projects over at least the upper sides of the rear ventilation plane and the cladding plane by means of a projecting section, wherein a first opening cross section (6) is formed between the drip-edge element (5) and the upper sides of the cladding elements, and wherein a second opening cross section (7) is formed on the lower side of the cladding elements (4), and wherein the air spaces (2) are connected to the first opening cross section (6) and the second opening cross section (7) in an air-conducting manner, **characterized in that**
the spacing elements (3) are designed as adjusting screws and are positively connected to the insulation plane and axially adjustable when being turned, wherein the adjusting screws are axially screwed in sections into the insulation plane and wherein the adjusting screws have a receiving section.

2. Base system according to claim 1,
wherein the cladding elements (4) comprise a passage (8) and wherein a slidable sealing element (9) by means of which the passage (8) can be covered in a sealing manner is assigned to the cladding elements (4), and wherein in the region of the passage (8) in the rear ventilation plane a circumferential sealing element (10) is arranged by means of which a sealing connection is provided between the cladding plane and the insulation plane.

3. Base system according to claim 1 or 2,
wherein the insulation elements (1) are made of an aerogel material.

4. Base system according to one of the previous claims,
wherein a foil, in particular made of EPDM material, is provided between the insulation plane and the base.

5. Base system according to one of the previous claims,
wherein the cladding elements can be connected to each other by H-sections (11) or corner profiles (12).

6. Base system according to claim 5,
wherein the H-sections (11) or the corner profiles (12) are made of an elastomer material.

7. Base system according to one of the previous claims,
wherein it has active fan elements which are connected to the air spaces (2) in an air-conducting manner.

8. Base system according to one of the previous claims,
wherein at least one LED light is provided on one lower side of the projecting section of the drip-edge element (5).

9. Base system according to one of the previous claims,
wherein the adjusting screw comprises a support bolt (18), wherein a first end (19) of the support bolt (18) is tapered, and it comprises a support disc (20), wherein the support disc (20) is connected to a second end (21) of the support bolt (18), a plane level of the support disc (20) is arranged perpendicular to a longitudinal axis of the support bolt (18), the support disc (20) has a plurality of passages (22) and a facade panel can be fastened to an upper side (23) of the support disc (20), and it comprises a helix structure (24), wherein the helix structure (24) surrounds the support bolt (18) at least partially, the helix structure (24) and the support bolt (18) are arranged in a fixed position relative to each other, and it comprises a stiffening section (25), wherein the stiffening section (25) is connected both to the support bolt (18) and to a lower side (26) of the support disc (20).

10. Base system according to claim 9,
wherein a a stop plate (27) spaced from the support plate (20) is provided, the stop plate (27) is arranged parallel to the support plate (20), the stop plate (27) is penetrated by the support pin (18), and the helix structure (24) is arranged on a side of the stop plate (27) facing away from the support plate (20).

11. Base system according to claim 9 or 10,
wherein the stiffening section (25) is addionally connected to the support plate (27).

12. Base system according to claim 9 through 11,
wherein the adjusting screw is made of plastic material.

## Revendications

1. Système de socle,
comprenant une couche d'isolation ouverte à la diffusion, qui inclut une pluralité des éléments d'isolation (1), et les éléments d'isolation (1) pouvant être reliés à un socle,
et comprenant une couche ventilée, qui comporte des espaces aériens (2) ainsi que des éléments d'écartement (3),
et comprenant une couche de revêtement, qui inclut une pluralité des éléments de revêtement (4), et les éléments de revêtement (4) étant conçus de façon plane et étant reliés aux éléments d'écartement (3) à leur section de prise,
et comprenant un élément de rebord antigouttes (5), dont la section de saillie fait saillie au moins la couche ventilée et la couche de revêtement sur ses faces supérieures, et une première section d'ouverture (6) étant formée entre l'élément de rebord antigouttes (5) et les faces supérieures des éléments de revêtement, et une deuxième section d'ouverture (7) étant formée sur la face inférieure des éléments de revêtement (4), et les espaces aériens (2) étant reliés à la première section d'ouverture (6) et la deuxième section d'ouverture (7) de sorte qu'ils soient parcourues par de l'air,
est **caractérisé en ce**
**que** les éléments d'écartement (3) sont réalisés comme vis de réglage et reliés à la couche d'isolation par assemblage de forme et de manière à être réglable axialement par leur rotation, et les vis de réglage étant axialement vissés par sections dans la couche d'isolation et les vis de réglage étant munies d'une section de prise.

2. Système de socle suivant la revendication 1
dont les éléments de revêtement (4) sont munis d'une section ajourée (8) et dont les éléments de revêtement (4) sont prévus d'un élément de cloisonnement coulissant (9), qui sert à couvrir la section ajourée (8) de façon étanche, et un élément d'étanchéité périphérique (10) étant disposé près de la section ajourée (8) dans couche ventilée et ledit élément d'étanchéité périphérique servant à établir une liaison étanche entre la couche de revêtement et la couche d'isolation.

3. Système de socle suivant les revendications 1 ou 2
dont les éléments d'isolation (1) se composent d'un matériau d'aérogel.

4. Système de socle suivant une des revendications précédentes
avec une feuille, en particulier en matériau EPDM, étant prévue entre la couche d'isolation et le socle.

5. Système de socle suivant une des revendications précédentes
dont les éléments de revêtement peuvent être reliés l'un à l'autre par des profilés en H (11) ou profilés angulaires (12).

6. Système de socle suivant la revendication 5
dont les profilés en H (11) ou profilés angulaires (12) se composent d'un matériau d'élastomère.

7. Système de socle suivant une des revendications précédentes,
qui est muni des éléments actifs de ventilation reliés aux espaces aériens (2) de sorte qu'ils soient parcourues par de l'air.

8. Système de socle suivant une des revendications précédentes
dont l'élément de rebord antigouttes (5) est muni au moins d'une source lumineuse LED sur une face inférieure de sa section de saillie.

9. Système de socle suivant une des revendications précédentes
dont la vis de réglage est munie d'un boulon d'appui (18) et une première extrémité (19) du boulon d'appui (18) se termine en pointe et dispose d'un disque d'appui (20) et le disque d'appui (20) est relié à une deuxième extrémité (21) du boulon d'appui (18) et une surface plane du disque d'appui (20) est disposée à angle droit à un axe longitudinal du disque d'appui (18), et le disque d'appui (20) possède une pluralité des sections ajourées (22), et un panneau de façade peut être fixé sur une face supérieure (23) du disque d'appui (20) et le disque d'appui possède une structure en hélice (24), ladite structure en hélice (24) entourant le boulon d'appui (18) au moins en partie, la structure en hélice (24) et le boulon d'appui (18) ayant une relation de position prédéterminée entre eux, et le disque d'appui dispose d'une section de renforcement (25), ladite section de renforcement étant reliée au boulon d'appui (18) et à la face inférieure (26) du disque d'appui (20).

10. Système de socle suivant la revendication 9
avec une plaque butée (27) étant disposée de façon espacée au disque d'appui (20) et la plaque butée (27) étant disposée de façon parallèle au disque d'appui (20) et la plaque butée (27) étant transpercée par le boulon d'appui (18) et la structure en hélice (24) étant disposée sur une face détournée du disque d'appui (20) de la plaque butée (27).

11. Système de socle suivant la revendication 9 ou 10
dont la section de renforcement (25) est en plus reliée à la plaque butée (27).

12. Système de socle suivant une des revendications 9 à 11
dont la vis de réglage consiste en matière plastique.
